# EUROPÄISCHE PATENTSCHRIFT

(11) **EP 0 409 922 B1**
(45) Veröffentlichungstag und Bekanntmachung des Hinweises auf die Patenterteilung: **22.09.1993**
(21) Anmeldenummer: 90900193.5
(22) Anmeldetag: 20.12.1989
(51) Int. Cl.: F16F 1/36

(54) **GUMMIFEDERBLOCK**
SHOCK-ABSORBING RUBBER BLOCK
BLOC ELASTIQUE EN CAOUTCHOUC

(30) Priorität: 22.12.1988 DE 3843321
(43) Veröffentlichungstag der Anmeldung: 30.01.1991
(73) Patentinhaber: WOCO Franz-Josef Wolf & Co., D-63628 Bad Soden-Salmünster (DE)
(72) Erfinder: WOLF, Franz, Josef, D-6483 Bad Soden-Salmünster (DE); PLETSCH, Hubert, D-6483 Bad Soden-Salmünster (DE)
(74) Vertreter: Jaeger, Klaus, Dr.
(86) Internationale Anmeldenummer: EP8901577
(87) Internationale Veröffentlichungsnummer: WO9007069

(56) Entgegenhaltungen:
- EP-A- 0 317 732
- DE-A- 2 421 663
- DE-U- 8 535 344
- FR-A- 1 495 611
- GB-A- 557 703
- US-A- 1 560 655

## Beschreibung

Die Erfindung betrifft einen Gummifederblock der im Oberbegriff der Anspruchs 1 gennanten Art.

Aus der deutschen Gebrauchsmusterschrift DE 85 35 344 U1 ist ein Federkörper aus Gummi bekannt, der aus einem mit zylindrischen oder prismatischen Kanälen durchsetzten Block besteht. Die Kanäle durchsetzen im Block ausgebildete Hohlräume. Der größte lichte Querschnitt dieser Hohlräume ist senkrecht zur Achse der sie durchsetzenden Kanäle größer als der Querschnitt der Kanäle in dieser Ebene. Die Achsen der Kanäle liegen auf den Mittelpunkten der insbesondere zumindest im wesentlichen und zumindest angenähert kugelförmigen Hohlräume. Dabei sind die Hohlräume und die Kanäle so angeordnet, daß der Block von mindestens zwei sich räumlich überkreuzenden, aber nicht schneidenden Scharen von untereinander parallelen Kanälen durchsetzt ist.

Dieser bekannte Gummifederkörper dient als Auflager oder Axiallager, wobei die von den Hohlräumen und den Kanälen gebildeten Gitterebenen quer, insbesondere senkrecht zum Vektor einer abzufedernden Nutzlast oder Auflast ausgerichtet sind.

Gummifederblöcke dieser Art sind durch eine große verfügbare Einsinktiefe, das heißt durch eine extrem weiche Federkennlinie, bei hoher mechanischer Festigkeit und weitgehender, in der Regel praktisch vollkommender akustischer Entkopplung zwischen Auflager und Widerlager gekennzeichnet.

Durch das Erfordernis der Anordnung der Gitternetzebenen der Hohlräume und Kanäle senkrecht zum Auflastvektor sind dem Einsatzbereich des in seinem Federverhalten und in seinem akustischen Verhalten als nahezu ideal zu bezeichnenden Gummifederkörpers konstruktive Grenzen gesetzt.

Der Erfindung liegt die Aufgabe zugrunde, einen Gummifederkörper bzw. Gummifederblock der eingangs genannten Art dahingehend zu verbessern, daß eine solche Gummifeder auch für solche konstruktiven Federaufgaben eingesetzt werden kann, bei denen der Auflastvektor nicht axial und senkrecht zu den Gitternetzebenen von zumindest zwei sich räumlich überkreuzenden aber nicht schneidenden Scharen von untereinander parallelen Kanälen ausgerichtetzzu sein braucht.

Zur Lösung dieser Aufgabe schafft die Erfindung einen Gummifederblock der eingangs genannten Art, der die im kennzeichnenden Teil des Anspruchs 1 genannten Merkmale aufweist.

Ein Federkörper dieser Art ist in Umfangsrichtung belastbar, ist also überall dort einsetzbar, wo Drehelastizitäten herzustellen sind. Überraschenderweise weist der Gummifederblock gemäß der Erfindung die gleichen Eigenschaften der hohen mechanischen Festigkeit bei weicher Federkennlinie und nahezu perfekter akustischer Abkopplung auf wie der bekannte axial belastbare Gitterfederblock..Dabei bezieht sich die Charakterisierung "weich" bzw. das Merkmal einer "großen Einsinktiefe" auf den Verdrehwinkel.

Ausgestaltungen der Erfindung sind Gegenstand der Unteransprüche.

Die Erfindung ist anhand eines Ausführungsbeispiels in Verbindung mit den Figuren näher erläutert. Es zeigen:
- Fig. 1: einen Gummifederblock in Draufsicht auf eine der beiden in der radialen Hauptebene liegenden Oberflächen; uns
- Fig. 2: in schematischer und erläuternder Darstellung einen Axialschnitt durch den Gummifederblock in radialer Ausrichtung.

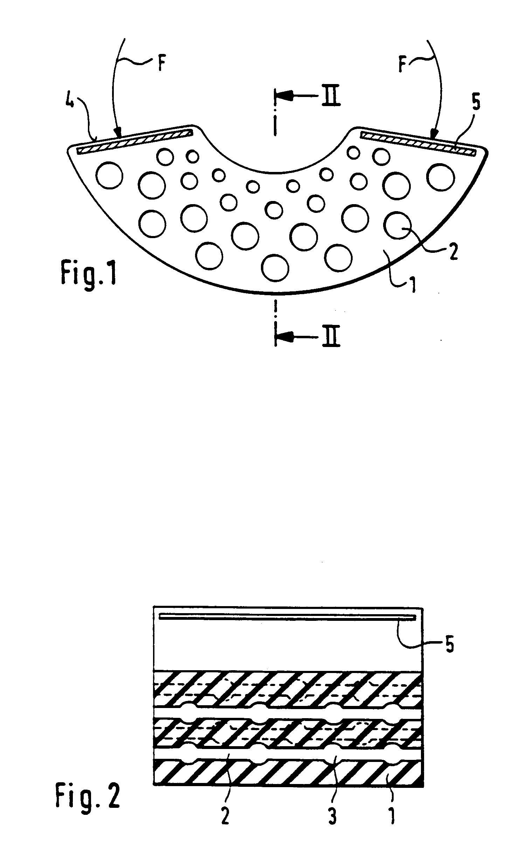

In der aus Fig. 1 erkennbaren Weise hat der Gummifederblock 1 die Gestalt eines Zylinderringscheibensegments. Der Gummiblock 1 ist in axialer Richtung mit einer Folge von beidseitig offenen hohlen Kanälen 2 durchsetzt, die ihrerseits kugelförmige Hohlräume 3 durchsetzen, und zwar dergestalt, daß die Achsen der Kanäle 2 die Mittelpunkte der Hohlräume 3 schneiden. Die Hohlräume 3 sind im Block 1 so verteilt, daß sie auf den sie durchsetzenden Kanälen jeweils gleichen bestand voneinander haben und von Kanal zu Nachbarkanal untereinander jeweils auf Lücke stehen. Die Auflagerflächen 4 des Gummiblocks 1 sind durch ein dicht unterhalb der Oberfläche einvulkanisiertes Stahlplättchen 5 zur verbesserten und homogeneren Lastaufnahme verstärkt. Die Nutzlastbeaufschlagung des Federblocks erfolgt in Umfangsrichtung, also als Torsionsbeaufschlagung,-in Richtung der gekrümmten Vektoren F.

Die Oberfläche des Gummiblocks 1 ist mit verbesserter Gleitfähigkeit ausgestattet, hier fluoriert.

Der in den Fig. 1 und 2 gezeigte Gummifederkörper kann in entsprechenden Lagergehäusen insbesondere zur Herstellung weicher drehelastischer Kupplungen dienen, wenn eine akustische Entkopplung zwischen Eingangswelle und Ausgangswelle einer solchen Kupplung bei hoher Drehweichheit gefordert sind.

## Patentansprüche

1. Mit Hohlräumen (3) und diese durchsetzenden Hohlkanälen (2) regelmäßig durchsetzter Gummifederblock (1), wobei die Querschnittsfläche der Hohlräume (3) größer als die Querschnittsfläche der diese Hohlräume (3) durchsetzenden Hohlkanäle (2) ist
**gekennzeichnet** durch
eine zylinderringsegmentscheibenförmige Gestalt, wobei die Hohlkanäle (2) zumindest im wesentlichen senkrecht zur Hauptebene des Zylinderringsegments ausgerichtet sind und wobei im wesentlichen die sowohl in Richtung der Hauptachse als auch radial ausgerichteten Flächen (4) des Zylinderringsegments als Auflagerflächen ausgebildet sind.

2. Gummifederblock nach Anspruch 1,
dadurch **gekennzeichnet**,
daß die Hohlkanäle (2) auf konzentrischen Kreisbogensegment angeordnet sind, die konzentrisch zum zylinderringsegmentscheibenförmipen Gummiblock sind.

3. Gummifederblock nach Anspruch 2,
dadurch **gekennzeichnet,**
daß die Hohlkanäle (2) von Kreisbogensegment zu Kreisbogensegment auf Lücke zueinander stehen.

4. Gummifederblock nach Anspruch 2 oder 3,
dadurch **gekennzeichnet**,
daß die Querschnitte der Hohlkanäle (2) und der insbesondere kugelförmigen Hohlräume (3) im Gummifederblock (1) von radial innen nach radial außen zunehmen, während ihre Verteilung, bezogen auf die Anzahl der Kanäle pro Kreisbogensegment, gleichbleibt.

5. Gummifederblock nach einem der Ansprüche 1 bis 3,
dadurch **gekennzeichnet**,
daß die Querschnitte der Hohlkanäle (2) und der insbesondere kugelförmigen Hohlräume (3) im Gummifederblock (1) von radial innen nach radial aussen gleich bleiben, während ihre Verteilungsdichte, bezogen auf die Anzahl der Kanäle pro kreisbogensegment, zunimmt.

6. Gummifederblock nach einem der Ansprüche 1 bis 4,
dadurch **gekennzeichnet**,
daß die Hohlräume (3), die insbesondere die Form regelmäßige Polyeder oder Kugelgestat haben, im Gummifederblock (1) räumlich gleichmäßig und auf Lücke stehend nach Art eines sich gleichmäßig nach radial außen aufweitenden raumzentrierten Gitters angeordnet sind.

7. Gummifederblock nach einem der Ansprüche 1 bis 6,
dadurch **gekennzeichnet**,
daß jeder der Hohlkanäle (2) mindestens drei Hohlräume (3) durchsetzt.

8. Gummifederblock nach einem der Ansprüche 1 bis 7,
dadurch **gekennzeichnet**,
daß auf, in oder unmittelbar unter der Oberfläche der Auflagerfläche (4) des Gummifederblocks (1) eine starre lastaufnehmende Scheibe (5), insbesondere Stahlscheibe, auf- oder einvulkanisiert oder -geklebt oder -gespannt ist.

9. Gummifederblock nach einem der Ansprüche 1 bis 8,
**gekennzeichnet**, durch
eine hochgleitfähige Ausrüstung zumindest eines Teils der Oberfläche des Gummifederblocks (1).

## Claims

1. A shock-absorbing rubber block (1) regularly crossed by cavities (3) in turn crossed by hollow ducts (2), the cross-sectional area of the cavities (3) being larger than the cross-sectional area of the hollow ducts (2) crossing these cavities (3),
characterized
by an annular, cylindrical disk-segment shape, the hollow ducts (2) being at least substantially perpendicular to the principal plane of the annular cylindrical disk-segment and where the surfaces (4) of the annular, cylindrical disk-segment extending essentially both in the direction of the main axis as well as radially are designed as rest surfaces.

2. Shock-absorbing rubber block defined in claim 1,
characterized in that
the hollow ducts (2) are arrayed on stratified arcs of circle concentric with respect to the annular, cylindrical disk-segment rubber block.

3. Shock-absorbing rubber block defined in claim 2, characterized in that the hollow ducts (2) are arrayed in mutually staggered manner from arc-of-circle stratum to arc-of-circle stratum.

4. Shock-absorbing rubber block defined in either of claims 2 and 3, characterized in that the cross-sections of the hollow ducts (2) and of the more particularly spherical cavities (3) in the shock-absorbing rubber block (1) increase from the radially inward to the radially outward position, whereas their distribution in number of ducts per arcuate stratum remains constant.

5. Shock-absorbing rubber block defined in one of claims 1 through 3, characterized in that the cross-sections of the hollow ducts (2) and of the more particularly spherical cavities (3) in the shock-absorbing rubber block (1) remain constant in the radial direction whereas their distribution density in number of ducts per arcuate stratum increases in the radial direction.

6. Shock-absorbing rubber block defined in one of claims 1 through 4, characterized in that the cavities (3) which more particularly assume the shape of regular polyhedra or spheres are uniformly distributed spatially in the shock-absorbing rubber block (1) while being mutually staggered in the manner of a radially expanding body-centered lattice.

7. Shock-absorbing rubber block defined in one of claims 1 through 6, characterized in that each hollow duct (2) crosses at least three cavities (3).

8. Shock-absorbing rubber block defined in one of claims 1 through 7, characterized in that a rigid, load-absorbing pane (5) is vulcanized onto, or into, or is bonded or tensioned on, or in or immediately underneath the rest surface (4).

9. Shock-absorbing rubber block defined in one of claims 1 through 8, characterized by at least part of the surface of the shock-absorbing rubber block (1) which is made to be highly slippery.

## Revendications

1. Bloc élastique en caoutchouc (1) traversé part des cavités (3) et des canaux creux (2) traversant ces derniers, étant entendu que la surface des sections des cavités (3) est plus grande que la surface de la section des canaux creux (2) traversant ces cavités (3),
caractérisé par
une structure en forme de disque annulaire cylindrique, les canaux creux (2) étant au moins essentiellement dirigés perpendiculairement au plan du segment annulaire cylindrique et les surfaces (4) du segment annulaire cylindrique, aussi bien dans la direction de l'axe principal que dans la direction radiale, étant essentiellement réalisées sous la forme de surfaces d'appui.

2. Bloc élastique en caoutchouc suivant la revendication 1, caractérisé en ce que les canaux creux (2) sont disposés sur des segments de cercle concentriques, eux-même concentriques par rapport au bloc en caoutchouc en forme de disques en segment annulaire cylindrique.

3. Bloc élastique en caoutchouc suivant la revendication 2, caractérisé en ce que les canaux creux (2) sont disposés en quinconce en allant d'un segment d'arc de cercle à un autre segment d'arc de cercle.

4. Bloc élastique en caoutchouc suivant la revendication 2 ou la revendication 3, caractérisé en ce que les sections des canaux creux (2) et des cavités (3), en particulier sphériques, dans le bloc élastique en caoutchouc (1) augmentent en allant radialement de l'intérieur vers l'extérieur, tandis que leur répartition, rapportée au nombre des canaux par segment d'arc de cercle reste la même.

5. Bloc élastique en caoutchouc suivant l'une quelconque des revendications 1 à 3, caractérisé en ce que les sections des canaux creux (2) et des cavités (3), en particulier sphériques, dans le bloc élastique en caoutchouc (1) restent les même en allant radialement de l'intérieur vers l'extérieur, tandis que leur répartition, rapportée au nombre des canaux par segment d'arc de cercle augmente.

6. Bloc élastique en caoutchouc suivant l'une quelconque des revendications 1 à 4, caractérisé en ce que les cavités (3), ayant en particulier la forme de polyèdres réguliers ou une forme sphérique, sont disposés, dans le bloc élastique en caoutchouc (1), régulièrement dans l'espace et en quinconce, à la façon d'un réseau centré dans l'espace, allant en s'élargissant régulièrement radialement vers l'extérieur.

7. Bloc élastique en caoutchouc suivant l'une quelconque des revendications 1 à 6, caractérisé en ce que chacun des canaux creux (2) traverse au moins trois cavités (3).

8. Bloc élastique en caoutchouc suivant l'une quelconque des revendications 1 à 7, caractérisé en ce que, sur la surface d'appui (4) du bloc élastique en caoutchouc (1), ou directement sous elle, une plaquette rigide (5) reprenant la charge, en particulier une plaque en acier, est fixée, sur elle ou à son intérieur, par vulcanisation, collage ou mise en serrage.

9. Bloc élastique en caoutchouc suivant l'une quelconque des revendications 1 à 8, caractérisé en ce qu'au moins une partie de la surface externe du bloc élastique en caoutchouc (1) est doté de caractéristiques de glissement élevées.
